# EUROPEAN PATENT APPLICATION

(11) **EP 2 523 287 A1**
(43) Date of publication of application: **14.11.2012**
(21) Application number: 11165517.1
(22) Date of filing: 10.05.2011
(51) Int. Cl.: H02G 15/013, G02B 6/44, H02G 15/076, H02G 15/117

(54) **Cable sealing device having a seal containment wall having movable portions for accomodating cables of different sizes**

(71) Applicant: Tyco Electronics Raychem BVBA, 3010 Kessel-Lo (BE); Tyco Electronics Corporation, Berwyn, PA 19312 (US)
(72) Inventor: Vastmans, Kristof, 3370, Boutersen (BE); Bryon, Roel Modest Willy, 3200, Aarschot (BE); De Vos, Pieter, 2600, Berchem (BE); Vandamme, Wouter, 9040, Sint Amandsberg (BE); Alston, Eric Emmanuel, NC 27526 Fuquay-Varina (US); Hangebrauck, Daniel B., NC 27529 Garner (US)
(74) Representative: Obst, Bernhard

(57) **Abstract**

The present disclosure relates to a cable sealing device (30) for providing a seal about a cable (90). The cable sealing device (30) includes a cable seal arrangement (38) that is pressurized to provide sealing about the cable (90). The cable seal arrangement (38) is contained when pressurized, at least in part, by a containment wall (92F, 92R). The containment wall (92F, 92R) includes moveable portions (104) configured to move to accommodate cables (90) of different sizes routed through the containment wall (92F, 92R) while maintaining containment of the cable seal arrangement (38) (Figure 9).

## Description

### BACKGROUND

Telecommunications systems typically employ a network of telecommunications cables capable of transmitting large volumes of data and voice signals over relatively long distances. The telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures are adapted to house and protect telecommunications components such as splices, termination panels, power splitters and wavelength division multiplexers. It is often preferred for the telecommunications enclosures to be re-enterable. The term "re-enterable" means that the telecommunications enclosures can be reopened to allow access to the telecommunications components housed therein without requiring the removal and destruction of the telecommunications enclosures. For example, certain telecommunications enclosures can include separate access panels that can be opened to access the interiors of the enclosures, and then closed to re-seal the enclosures. Other telecommunications enclosures take the form of elongated sleeves formed by wrap-around covers or half-shells having longitudinal edges that are joined by clamps or other retainers. Still other telecommunications enclosures include two half-pieces that are joined together through clamps, wedges or other structures.

Telecommunications enclosures are typically sealed to inhibit the intrusion of moisture or other contaminants. Pressurized gel-type seals have been used to effectively seal the locations where telecommunications cables enter and exit telecommunications enclosures. Example pressurized gel-type seals are disclosed by document EP 0442941 B1 and document EP 0587616 B1. Both of these documents disclose gel-type cable seals that are pressurized through the use of threaded actuators. Document US 4,267,401 and document 6,150,608 disclose pressurized cable seals having compression plates including open-ended radial slots for receiving telecommunications cables. While pressurized cable seals have generally proven to be effective, improvements in this area are still needed.

### SUMMARY

One aspect of the present disclosure relates to a cable sealing device for providing a seal about a cable. The cable sealing device includes a cable seal arrangement that is pressurized to provide sealing about the cable. The cable seal arrangement is contained when pressurized, at least in part, by a containment wall. The containment wall includes moveable portions configured to move to accommodate cables of different sizes routed through the containment wall while maintaining containment of the cable seal arrangement. In certain embodiments, the movable portions are elastic and elastically clamp the cables routed through the containment wall. The movable portions allow one type of cable sealing device to be used to accommodate many different cable sizes and styles.

In certain embodiments, the moveable members are flexible cable pass-through members having a cantilevered configuration with base ends connected to the base region. In certain embodiments, the flexible cable pass-through members have lengths that extend radially outwardly from the base region. In further embodiments, the flexible cable pass-through members are arranged in a comb-like configuration. In still other embodiments, the flexible cable pass-through members are parallel to one another. In further embodiments, the flexible cable pass-through members can be flexed between a non-flexed position in which the flexible cable pass-through members define a first cable receiving spacing and a flexed position in which the flexible cable pass-through members define a second cable receiving spacing. In certain embodiments, the second cable receiving spacing is at least 10 percent larger than the first cable receiving spacing. In certain embodiments, the flexible cable pass-through members can be flexed between a non-flexed position in which the flexible cable pass-through members define a first cable receiving spacing and a flexed position in which the flexible cable pass-through members define a second cable receiving spacing. In still other embodiments, the containment wall comprises a compression plate formed by a first portion and a second portion. The first portion includes the base region and the plurality of flexible cable pass-through members. The first and second portions cooperate to define a main cable opening that extends through the containment wall. The first and second portions can be separated from one another to allow a cable to be laterally inserted into the main cable opening. In other embodiments, the cable sealing device includes two of the containment walls that are separated from one another. The cable seal arrangement is positioned between the containment walls.

In certain embodiments of the present disclosure, the cable sealing device further includes an actuator for forcing the containment walls together to compress the cable seal arrangement. In further embodiments, the cable sealing device further includes a lateral containment structure that laterally contains the cable seal arrangements. The lateral containment structure includes separate components that are forced together to compress the cable seal arrangement. In still other embodiments, the cable sealing arrangement includes sealing inserts having different configurations. Different sealing inserts can be selected to customize the cable sealing arrangement to accommodate a particular cable size. In certain embodiments, the flexible cable pass-through members extend radially outwardly from an axis.

A further aspect of the present disclosure relates to a region for clamping a cable. The region includes moveable portions configured to elastically move to accommodate cables of different sizes with the cables being elastically clamped by the moveable portions. In certain embodiments, the regions can be located at cable entrance locations of enclosures.

### BRIEF DESCRIPTION OF THE DRAWINGS

Figure 1 is a front, top perspective view of a telecommunications enclosure in accordance with the principles of the present disclosure;
Figure 2 is a front, elevation view of the telecommunications enclosure of Figure 1;
Figure 3 is a side, elevation view of the telecommunications enclosure of Figure 1;
Figure 4 is a rear, elevation view of the telecommunications enclosure of Figure 1;
Figure 5 is a top, plan view of the telecommunications enclosure of Figure 1;
Figure 6 is a bottom, plan view of the telecommunications enclosure of Figure 1;
Figure 7 is an exploded view of the telecommunications enclosure of Figure 1 showing a main housing exploded outwardly from a cable sealing device;
Figure 8 is a perspective view showing the cable sealing device of Figure 7 with a peripheral casing exploded outwardly from the remainder of the cable sealing device;
Figure 9 is an exploded view of the cable sealing device of Figure 7 showing a cable sealing arrangement exploded outwardly from an actuator of the cable sealing device;
Figure 10 is a front, elevation view of the cable sealing arrangement of the cable sealing device of Figure 7, the cable sealing arrangement is shown in a non-pressurized state;
Figure 11 shows the cable sealing arrangement of Figure 10 in a pressurized state;
Figure 12 is an exploded view of the actuator of the cable sealing device of Figure 7;
Figure 13 is a cross-sectional view of the telecommunications enclosure of Figure 1 with a cam lever of the telecommunications enclosure in a non-actuated state, the cross-section is taken along a vertical cross-section plane that longitudinally bisects the telecommunications enclosure;
Figure 14 is a cross-sectional view showing the telecommunications enclosure of Figure 1 with the cam lever in an actuated state, the cross-section is taken along a vertical cross-section plane that longitudinally bisects the telecommunications enclosure;
Figure 15 is a front, elevation view of a front compression plate of the cable sealing device of Figure 7, the front compression plate is shown with flexible cable pass-through members in a non-flexed orientation;
Figure 16 shows the front compression plate of Figure 15 with selected ones of the cable pass-through members in a flexed orientation;
Figure 17 is a front, elevation view of a rear compression plate of the sealing device of Figure 7, the rear compression plate is shown with flexible cable pass-through members in a non-flexed orientation;
Figure 18 shows the rear compression plate of Figure 17 with selected ones of the cable pass-through members in flexed orientations;
Figure 19 is an exploded view of the cable sealing device of Figure 7, the exploded view shows a wrap-around configuration for receiving cables through main central openings of the cable sealing device;
Figure 20 is an exploded view of the sealing device of Figure 7 showing a wrap-around configuration for receiving peripheral cables through a peripheral cable passage region;
Figure 21 shows an alternative cable sealing arrangement that can be used with the cable sealing device of Figure 7;
Figure 22 shows an alternative compression plate in accordance with the principles of the present disclosure; and
Figure 23 is an exploded view showing an alternative cable sealing device in accordance with the principles of the present disclosure.

### DETAILED DESCRIPTION

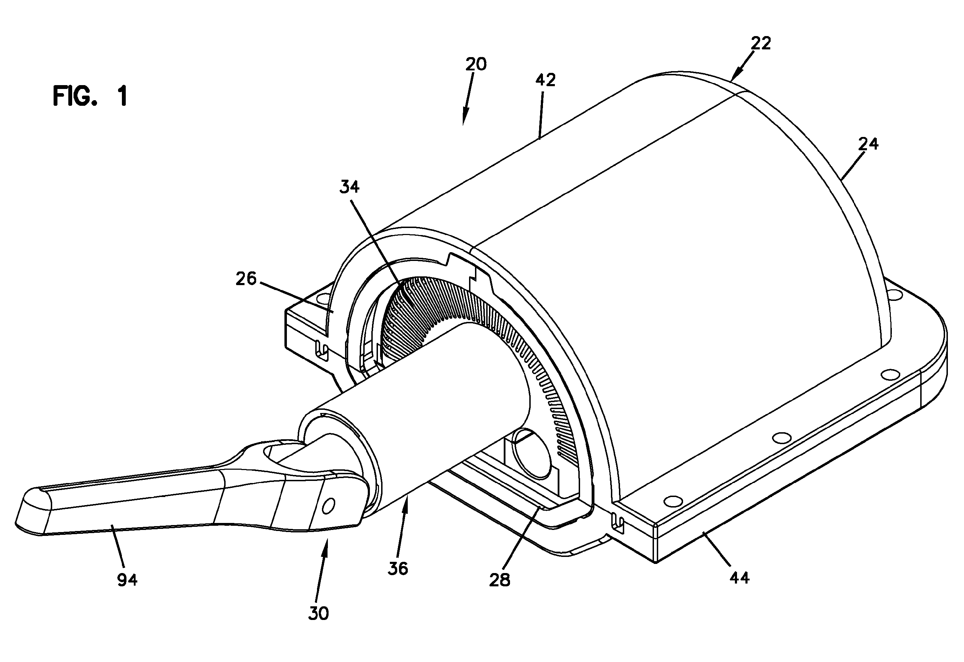

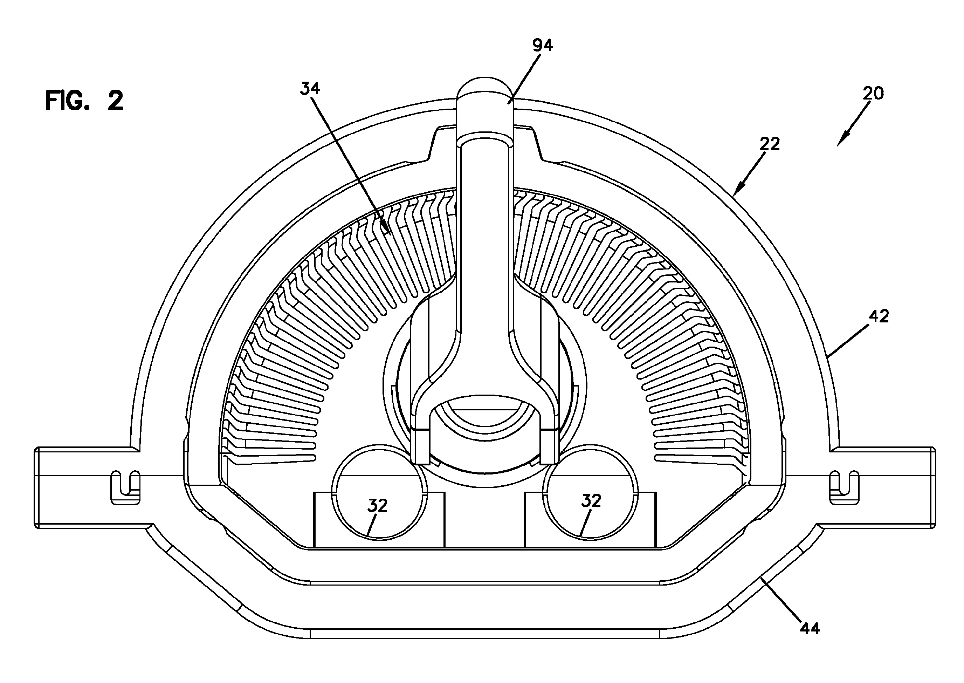

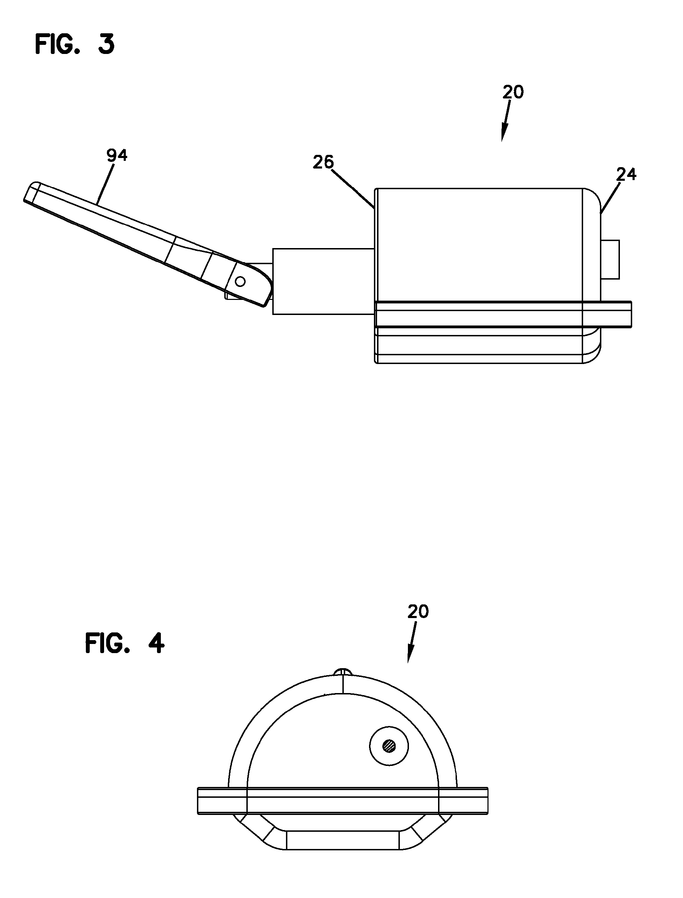

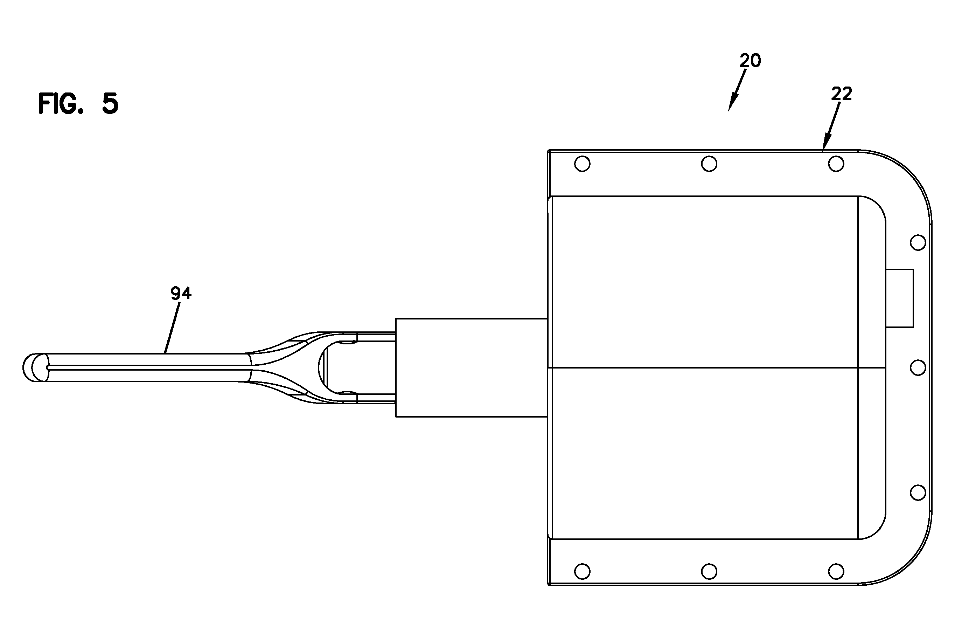

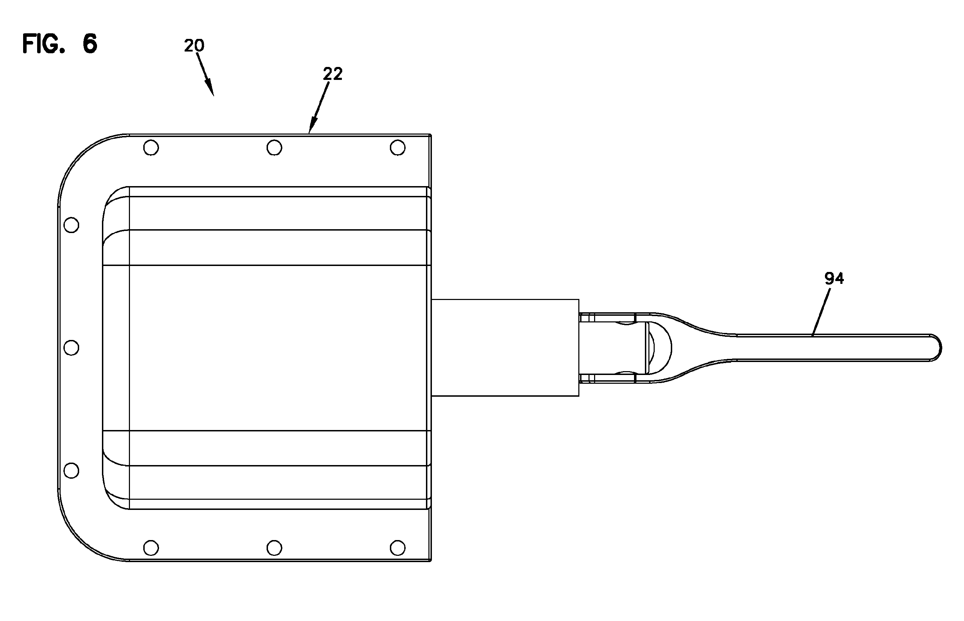

Figures 1-6 illustrate a telecommunications enclosure 20 in accordance with the principles of the present disclosure. The telecommunications enclosure 20 is adapted for housing and protecting telecommunications optical and/or electrical components such as splices (e.g., mechanical splices, fusion splices, etc.), power splitters, multiplexing components (e.g., wavelength division multiplexers (WDM's)) or other components. The telecommunications enclosure 20 is preferably environmentally sealed to inhibit the intrusion of moisture, dust or other contaminants. Sealed cable entry/exit locations are preferably provided for allowing telecommunications cables (e.g., fiberoptic cables, electrical cables, etc.) to be routed into and out of the telecommunications enclosure 20 without compromising the overall environmentally sealed nature of the telecommunications enclosure 20. In the depicted embodiment, the telecommunications enclosure 20 is a butt-style enclosure in which cables are routed through only one end of the telecommunications enclosure 20. In-line pass-through enclosures are also contemplated to be within the scope of the present disclosure.

Referring still to Figures 1-6, the telecommunications enclosure 20 includes a main housing 22 having a first end 24 and an opposite second end 26. The first end 24 of the main housing 22 is closed while the second end 26 defines an opening 28 in which a cable sealing device 30 is mounted. The cable sealing device 30 includes central cable ports 32 for allowing larger cables (e.g., trunk fiberoptic cables, feeder cables, distribution cables, etc.) to be routed into and/or out of the main housing 22. The cable sealing device 30 further includes peripheral cable passage regions 34 for allowing smaller profile cables (e.g., drop cables) to enter and/or exit the main housing 22. The cable sealing device 30 also includes an actuator 36 for use in compressing a cable seal arrangement 38 of the cable sealing device 30 so as to provide environmental seals about each of the cables routed through the cable sealing device 30.

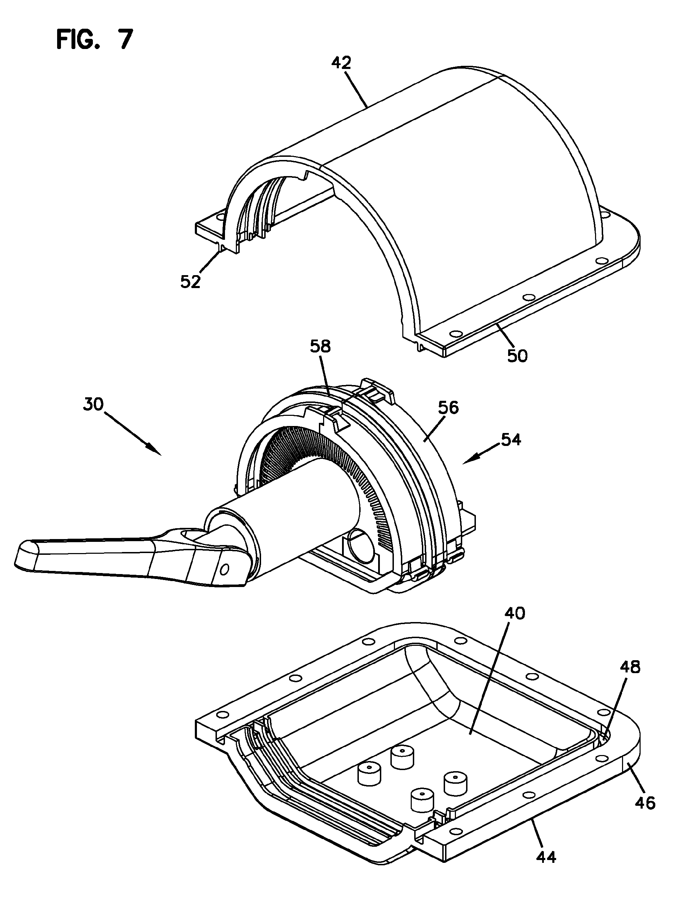

Referring to Figure 7, the main housing 22 defines an interior region 40 for housing components (e.g., optical or electrical components) of the type described above. The main housing 22 includes a cover piece 42 that mounts to a base piece 44. The base piece 44 includes a base flange 46 that extends around a perimeter of the interior region 40. The base flange 46 defines a groove 48 for receiving a sealing member. The cover piece 42 includes a cover flange 50 that abuts against the base flange 46 when the cover piece 42 is attached to the base piece 44. The cover flange 50 includes a seal compression member 52 that fits within the groove 48 when the cover piece 42 is secured to the base piece 44. The seal compression member 52 functions to compress the sealing member within the groove 48 to provide an effective environmental seal between the cover piece 42 and the base piece 44. It will be appreciated that the cover piece 42 and the base piece 44 can be secured together by a variety of mechanical means. Example mechanical means include fasteners extending through the base flange 46 and the cover flange 50, clamps, latches, or other structures. It is preferred for the mechanical means to allow the main housing 22 to be re-enterable.

Referring still to Figure 7, the cable sealing device 30 mounts within the opening 28 at the second end 26 of the main housing 22. The cable sealing device 30 includes a cable sealing unit 54 having a perimeter casing 56 that laterally surrounds the cable seal arrangement 38. The perimeter casing 56 can also be referred to as a boundary element, a containment element, a boundary structure, containment structure or like terms. The perimeter casing 56 preferably has a relatively rigid construction and functions to laterally contain and enclose the cable seal arrangement 38. An outer sealing element 58 circumscribes an exterior of the perimeter casing 56. When the cable sealing device 30 is mounted within the opening 28 of the main housing 22, the cable sealing device 30 is captured between the cover piece 42 and the base piece 44 of the main housing 22. When the cover piece 42 and the base piece 44 are secured together with the cable sealing device captured thereinbetween, the outer sealing element 58 is compressed thereby providing a circumferential seal between the main housing 22 and the perimeter casing 56 of the cable sealing unit 54.

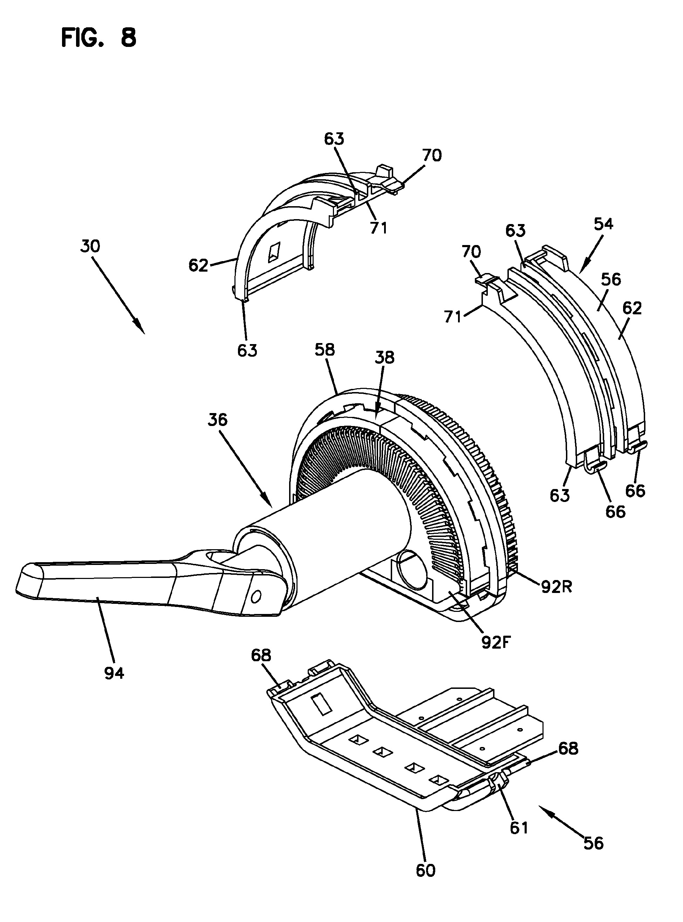

Referring to Figure 8, the perimeter casing 56 of the cable sealing unit 54 includes a base piece 60 and two bridge pieces 62. The bridge pieces 62 include lower ends 65 having lower hooks 66 that engage catches 68 of the base piece 60 to secure the bridge pieces 62 to the base piece 60. The bridge pieces 62 also include upper latches 70 (e.g., snap fit latches) for latching together upper ends 71 of the bridge pieces 62. When the bridge pieces 62 and the base piece 60 are secured together to form the perimeter casing 56, the resultant structure has a rigid construction capable of autonomously (i.e., independently) constraining and containing the cable seal arrangement 38 when the cable seal arrangement 38 is compressed to a level suitable for providing effective environmental sealing about cables routed through the cable seal arrangement 38. As used above, the terms "autonomous" or "independent" mean that the perimeter casing 56 is capable of constraining and containing the cable seal arrangement 38 as described above without the assistance of other outside structures such as the main housing 22. Because of the autonomous containment provided by the perimeter casing 56, the cable seal arrangement 38 can be fully pressurized through the use of the actuator 36 even when the cable sealing device is not mounted within the main housing 22. Additionally, the autonomous containment provided by the perimeter casing 56 allows the cable seal arrangement 38 to remain fully pressurized even when the main housing 22 is opened for re-entry. Thus, the cable seal arrangement 38 is only pressurized and depressurized through use of the actuator 36 (e.g., when it is desired to add a cable, remove a cable or adjust the existing cables). Minimizing the frequency that the cable seals are disturbed can assist in preventing the cable seals from becoming compromised over time.

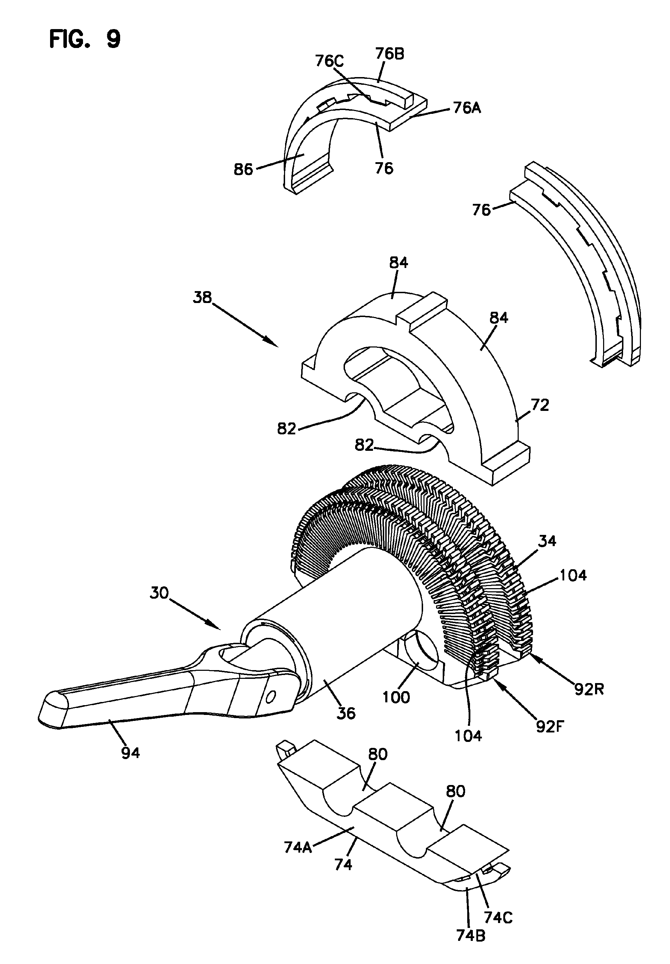

Referring to Figure 9, the cable seal arrangement 38 of the cable sealing device 30 includes a central sealing member 72, a lower sealing member 74, and two upper sealing members 76. The sealing members can be referred to as sealing blocks, sealing elements, sealing components, sealing structures or like terms. It is preferred for each of the sealing members to have a flowable or resilient construction that allows the sealing members to flow and/or deform when compressed so as to fill any void areas within the volume defined by the perimeter casing 56.

As shown at Figures 8 and 9, the upper sealing members 76 are shown separate from the bridge pieces 62 and the lower sealing member 74 is shown separate form the base piece 60. In certain embodiments, the upper sealing members 76 can be integrated with the bridge pieces 62 and the lower sealing member 74 can be integrated with the base piece 60 through the use of a co-molding process. For example, the lower sealing member 74 can include an inner portion 74A molded inside the base piece 60 and an outer portion 74B molded within an outer channel 61 defined by the base piece 60. The inner portion 74A and the outer portion 74B of the lower sealing member 74 are interconnected by radial legs 74C that extend through corresponding openings defined through the base piece 60. Similarly, the upper sealing members 76 include inner portions 76A molded inside the bridge pieces 62 and outer portions 76B molded within outer channels 63 defined by the bridge pieces 62. The outer portions 76B are connected to the inner portions 76A by radial leg portions 76C that extend through corresponding openings defined by the bridge pieces 62. The outer portions 76B of the upper sealing members 76 and the outer portion 74B of the lower sealing member 74 cooperate to define the outer sealing element 58 that circumscribes the perimeter casing 56.

A bottom side of the central sealing member 72 cooperates with a top side of the lower sealing member 74 to provide circumferential seals about the peripheries (e.g., outer diameters) of cables routed through the central cable ports 32. More specifically, the upper side of the lower sealing member 74 defines two half-openings 80 that align with corresponding half-openings 82 defined by the bottom side of the central sealing member 72. The half-openings 80, 82 cooperate to define the central cable ports 32. When the central sealing member 72 and the lower sealing member 74 are compressed within the perimeter casing 56 while cables are routed through the central cable ports 32, the central sealing member 72 and the lower sealing member 74 deform and/or flow about the cables to effectively provide circumferential sealing about the outer diameters of the cables. When cables are not routed through the central cable ports 32, it will be appreciated that the central cable ports 32 can be closed by temporary plugs.

Cables can be routed between a top side of the central sealing member 72 and bottom sides of the upper sealing members 76. More particularly, peripheral cables can be routed between outwardly facing sealing surfaces 84 (e.g., convex sealing surfaces) of the central sealing member 72 and inwardly facing sealing surfaces 86 (e.g., concave sealing surfaces) defined by the upper sealing members 76. When the central sealing members 72 and the upper sealing members 76 are compressed while cables are routed thereinbetween, the central sealing members 72 and the upper sealing members 76 deform and/or flow within the volume defined by the perimeter casing 56 so as to fill voids around the cables thereby forming effective seals about outer peripheries of the cables.

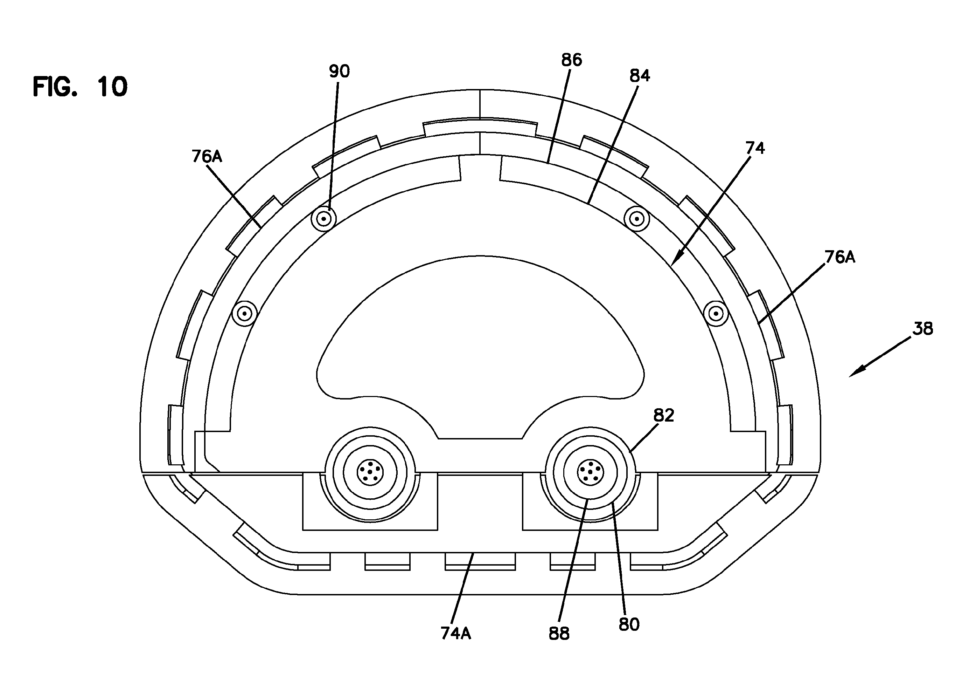

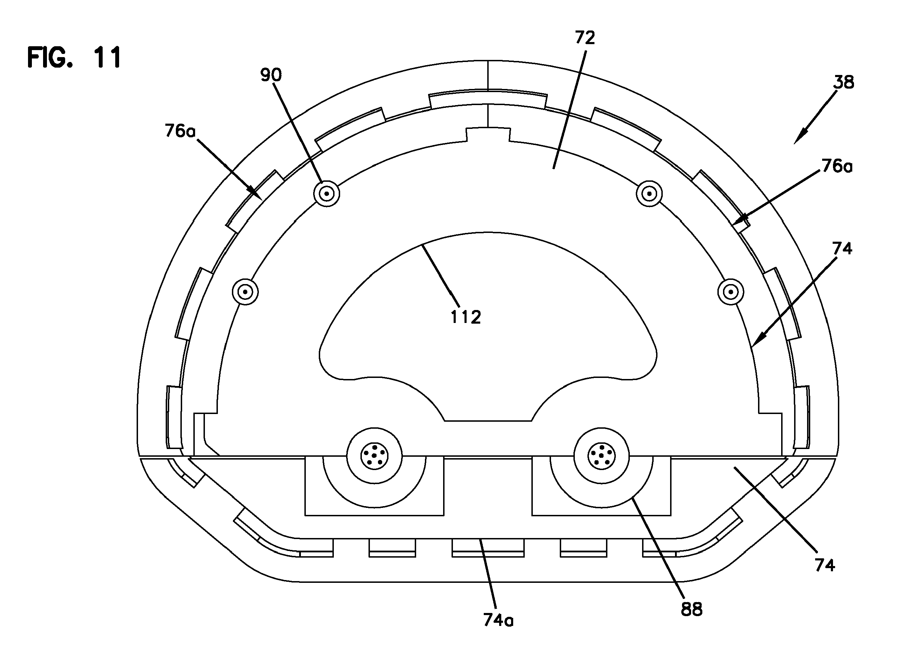

Figure 10 shows the cable seal arrangement 38 in a non-pressurized state. Main cables 88 and a plurality of peripheral cables 90 are shown routed through the cable seal arrangement 38. When the cable seal arrangement 38 is pressurized, the cable sealing arrangement flows and/or deforms to fill voids about the main cables 88 and the peripheral cables 90 and to effectively provide seals about outer jackets of the cables. Figure 11 schematically shows the cable seal arrangement 38 in a pressurized state in which the central sealing member 72, the lower sealing member 74, and the upper sealing members 76 have flowed to a sealing configuration in which seals are provided about jackets of the main cables 88 and the peripheral cables 90. While the peripheral cables 90 have generally been depicted as having circular outer diameters, it will be appreciated that cables having other types of transverse sectional profiles (e.g., elongated cross-sections as often seen in flat drop cables) can also be accommodated.

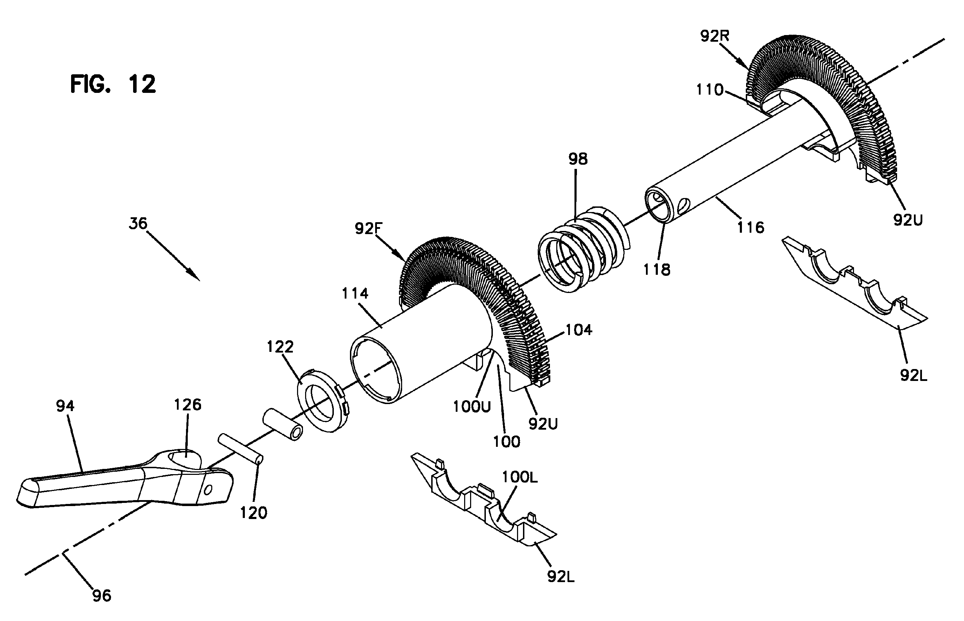

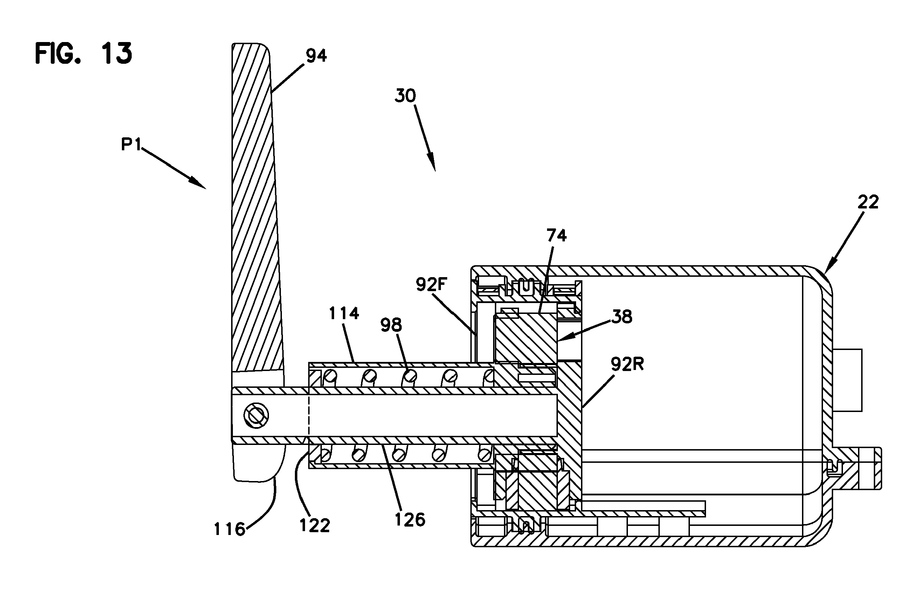

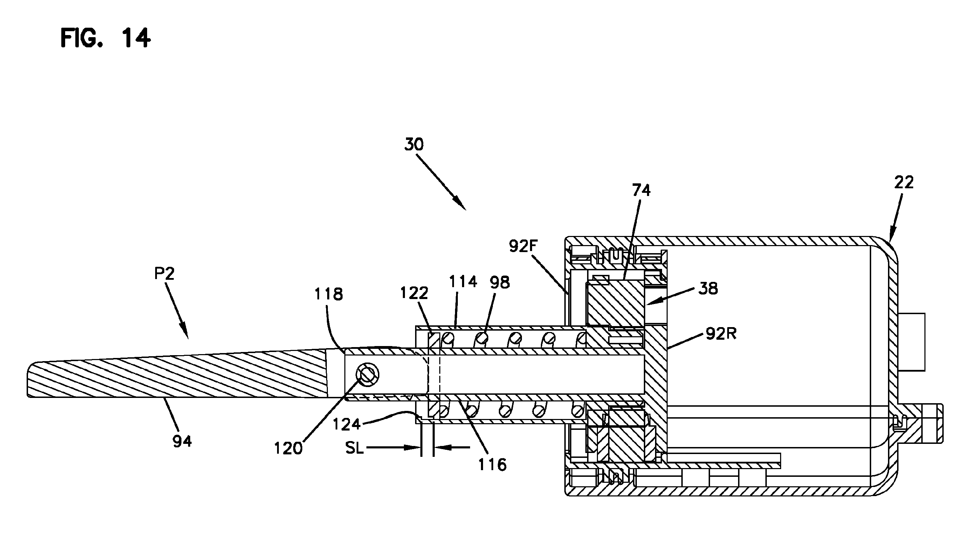

Referring to Figures 12-14, the actuator 36 of the cable sealing device 30 includes a front compression plate 92F and a rear compression plate 92R between which the cable seal arrangement 38 is mounted. The front compression plate 92F and the rear compression plate 92R can be referred to as axial containment walls. The actuator 36 also includes a cam lever 94 that is pivotally movable between a non-actuated position P1 (see Figure 13) and an actuated position P2 (see Figure 14). Movement of the cam lever 94 from the non-actuated position to the actuated position forces the front compression plate 92F and the rear compression plate 92R together thereby transitioning the cable sealing arrangement from the non-pressurized state (see Figure 10) to the pressurized state (see Figure 11). The front compression plate 92F and the rear compression plate 92R are forced together in an axial orientation along axis 96. The front compression plate 92F and the rear compression plate 92R respectively provide front and rear axial containment of the cable seal arrangement 38. A spring 98 controls the amount of axial compressive load that can be applied to the cable seal arrangement 38 by the front compression plate 92F and the rear compression plate 92R. It will be appreciated that in other embodiments, other types of actuators (e.g., screw type actuators) can be used to compress the cable seal arrangement 38. The spring 98 has a stroke length SL.

The front compression plate 92F and the rear compression plate 92R each include an upper plate portion 92U and a lower plate portion 92L. When the upper plate portion 92U and the lower plate portion 92L are coupled together, the upper plate portion 92U and the lower plate portion 92L work together as a single plate for applying compressive load to the cable seal arrangement 38. The upper plate portion 92U and the lower plate portion 92L cooperate to define openings 100 that correspond to the central cable ports 32. The lower plate portions 92L define lower half-openings 100L and the upper plate portions 92U define upper half-openings 100U that cooperate to define the openings 100.

The upper plate portions 92 define base regions 102 and the cable passage regions 34. The cable passage regions 34 are configured to function as containment walls for providing containment of the cable seal arrangement 38, while concurrently allowing cables of different sizes to pass therethrough. Preferably, the cable passage regions 34 include portions that can move, change or morph to provide variable size cable passages (i.e., opening, spacing, space, area) capable of accommodating cables of different sizes while still maintaining containment of the cable seal arrangement 38. In certain embodiments, the cable passage regions 34 include portions that can elastically move, change or morph so as to accommodate cables of different sizes while still maintaining containment of the cable seal arrangement 38. In certain embodiments, spacings defined by the movable portions can vary in size by at least 10 percent, or at least 25 percent, or at least 50 percent, or at least 100 percent, or at least 200 percent, or a least 300 percent, or at least 400 percent between a neutral size and an expanded size. In certain embodiments, the movable portions are constructed to move more easily in an orientation along a plane perpendicular to an axis of the cable as compared to an orientation along a plane parallel to the axis of the cable. This construction allows the movable portions to move to enlarge spacings for receiving cables while still maintaining containment of the cable seal arrangement 38.

In one embodiment, the cable passage regions 34 include movable portions in the form of flexible cable pass-through members 104 that project outwardly from the base regions 102. It will be appreciated that the flexible cable pass-through members 104 can be referred to as flexible arms, flexible fingers, flexible elements, or like terms. The flexible cable pass-through members 104 can have a cantilevered configuration with base ends 106 integrally connected to the base regions 102 and free ends 108 spaced radially outwardly from the base regions 102 relative to the axis 96. The flexible cable pass-through members 104 have lengths that traverse the gap/interface defined between the central sealing member 72 and the upper sealing members 76 such that cables routed through the cable passage regions 34 are routed through the gap/interface between the central sealing member 72 and the upper sealing members 76 as shown at Figures 10 and 11. The flexible cable pass-through members 104 can flex about their base ends 106 along a plane generally perpendicular relative to the axis 96. The spacings between the flexible cable pass-through members 104 are preferably sized to prevent the cable seal arrangement 38 from flowing between the flexible cable pass-through members 104 when the cable seal arrangement 38 is pressurized. Thus, the flexible cable pass-through members 104 are effective for providing axial containment of the cable seal arrangement 38.

In certain embodiments, the cable pass-through members 104 are more flexible in an orientation along the plane perpendicular to the axis 96 than in a plane parallel to the axis 96. Thus, the cable pass-through members 104 resist bending in a plane along the axis so as to provide containment of the cable seal arrangement 38, and readily bend along the plane perpendicular to the axis 96 to readily allow cables to be inserted between the cable pass-through members 104.

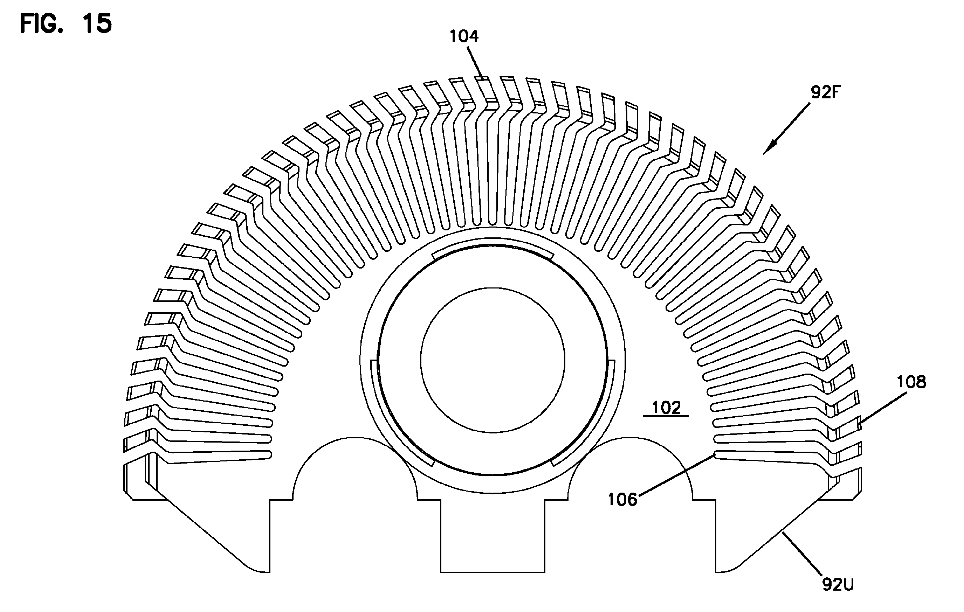

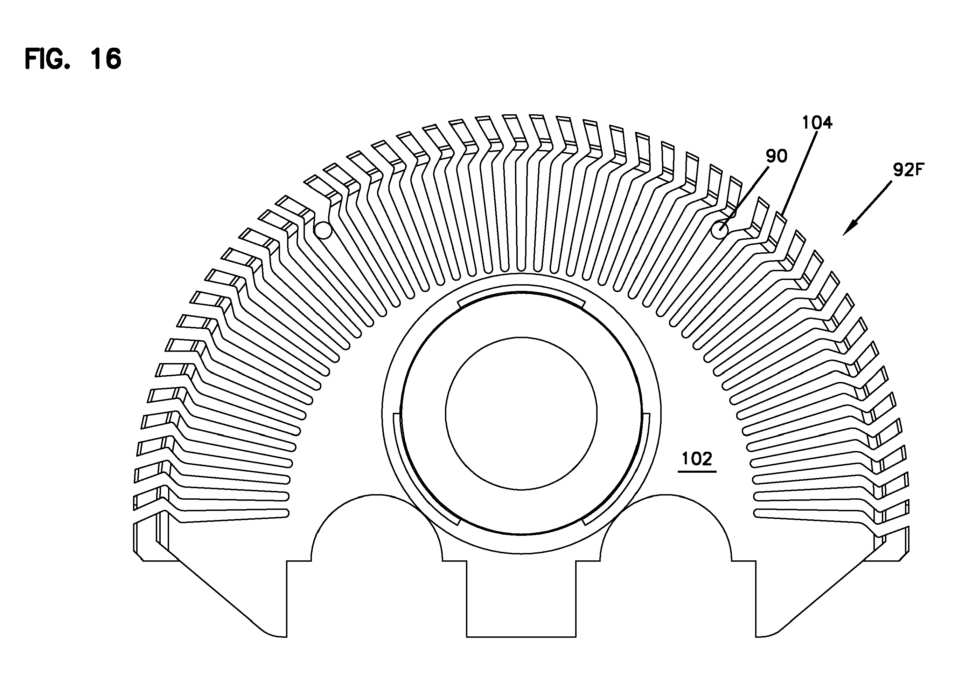

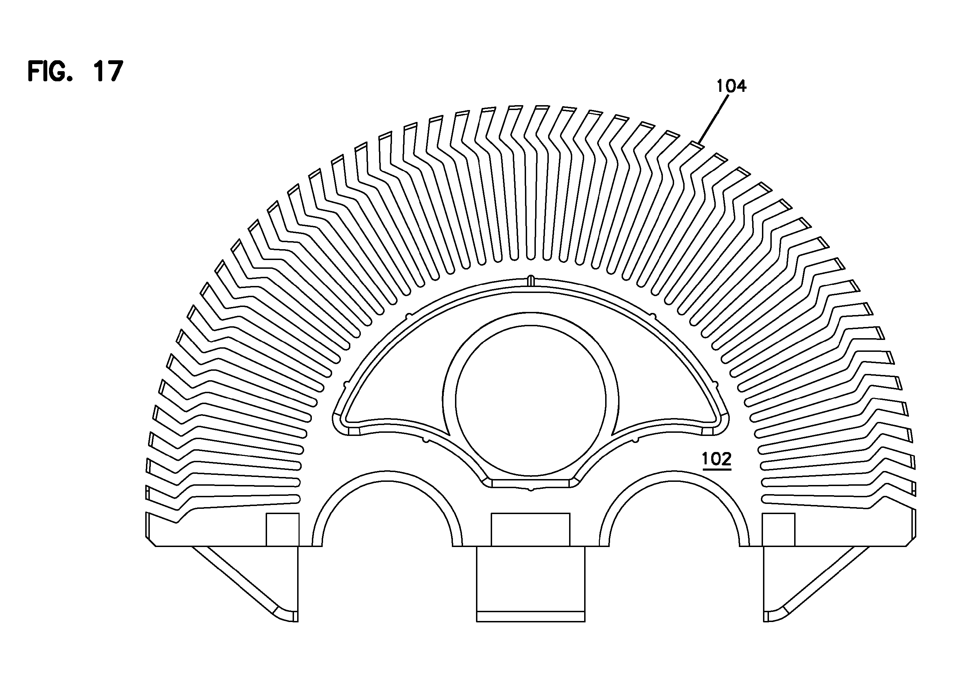

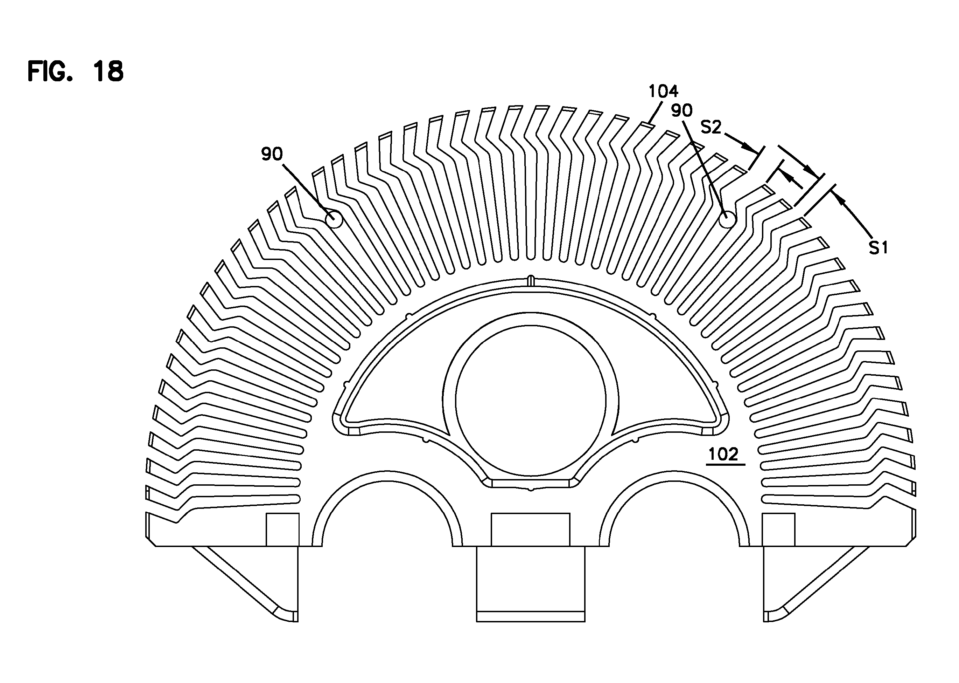

The flexible nature of the flexible cable pass-through members 104 allows cables of various sizes to be routed through the peripheral cable passage regions 34. For example, the flexible cable pass-through members 104 are capable of flexing apart to accommodate peripheral cables of larger size. Figure 15 shows the upper plate portion 92U of the front compression plate 92F with no peripheral cables 90 inserted between any of the flexible cable pass-through members 104 such that the flexible members are all shown in non-flexed positions (i.e., neutral states). In contrast, Figure 16 shows selected ones of the flexible cable pass-through members 104 of the front compression plate 92F flexed apart from their non-flexed positions to flexed positions (i.e., elastically loaded states) so as to accommodate peripheral cables 90 inserted through the peripheral cable passage region 34. Similarly, Figure 17 shows the flexible cable pass-through members 104 of the rear compression plate 92R in non-flexed positions, and Figure 18 shows selected ones of the flexible cable pass-through members 104 of the rear compression plate 92R flexed apart to accommodate peripheral cables 90 inserted through the peripheral cable passage regions 34.

Referring still to Figures 15-18, the flexible cable pass-through members 104 define first spacings S1 when in the non-flexed positions and second spacings S2 when in the flexed positions. In certain embodiments, S2 is at least 10 percent, 25 percent, or 50 percent larger than S1. In further embodiments, S2 is at least 100 percent larger than S1, or S2 is at least 200 percent, 300 percent or 400 percent larger than S1. In one embodiment, the flexible cable pass-though members 104 can flex to vary the spacing an amount ranging from 2 millimeters in the neutral state to 8 millimeters in the fully flexed state.

When a cable is inserted between two of the cable pass-through members 104, the flexible cable pass-though members 104 flex elastically apart and are elastically biased against the outer surface of the cable thereby providing a clamping action that resists axial movement of the cable. Thus, the cable pass-through members 104 can provide a clamping action used to provide strain relief. In certain embodiments, one or more crimps or other axial retention structures can be provided on the cable for providing further resistance to axial cable movement relative to the sealing device 30. For example, crimps can be provided on the cable immediately in front of the front compression plate 92F and immediately behind the rear compression plate 92R. The crimps can be larger than the spacings between the cable pass-through members 104 such that the crimps can not pass between the flexed pass-through members 104. Thus, interference between the crimps and the cable pass-through members 104 limits axial movement of the cable. In other embodiments, the axial retention members may be mounted on cables adjacent the front side of the front compression plate 92F, adjacent the rear side of the front compression plate 92F, or adjacent both sides of the front compression plate 92F. Similarly, the axial retention members may be mounted on cables adjacent the front side of the rear compression plate 92R, adjacent the rear side of the rear compression plate 92R, or adjacent both sides of the rear compression plate 92R.

It will be appreciated that the cable sealing unit 54 has a wrap-around cable sealing configuration that allows cables to be radially/laterally inserted into the central cable ports 32 and the peripheral cable passage regions 34. Thus, it is not required for cables to be axially threaded through the central cable ports 32 or the peripheral cable passage regions 34 during installation of the cables.

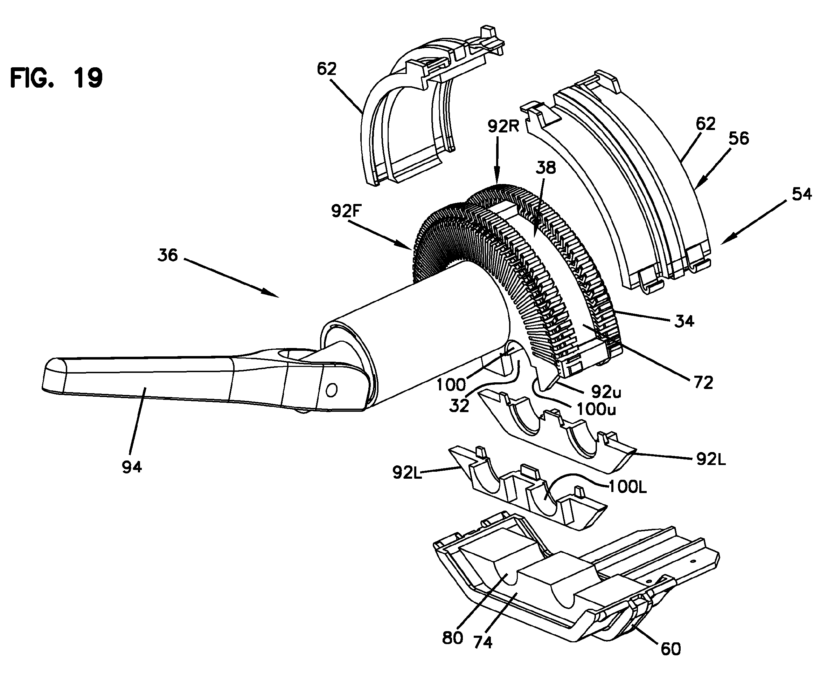

By disassembling the cable sealing unit 54 as shown at Figure 19, cables can be easily laterally inserted into either the central cable ports 32 or the peripheral cable passage regions 34. For example, main cables 88 can be laterally inserted into the central cable ports 32 by inserting the cables into the half-openings 82 defined by the bottom side of the central sealing member 72 and also into the upper half-openings 100U of the openings 100 defined by the upper plate portions 92U of the front compression plate 92F and the rear compression plate 92R. Subsequently, the lower plate portions 92L can be inserted under the cables and secured to the upper plate portions 92U such that the cables are captured within the openings 100 defined by the upper half-openings 100U defined by the upper plate portions 92U and the lower half-openings 100L defined by the lower plate portions 92L. Subsequently, the lower sealing member 74 carried by the base piece 60 is inserted under the cables and between the front compression plate 92F and the rear compression plate 92R such that the cables are captured within the half-openings 80, 82 respectively defined by the central sealing member 72 and the lower sealing member 74. The bridge pieces 62 are then hooked to the base piece 60 and latched together at the top of the perimeter casing 56 to lock the pieces of the perimeter casing together. As so assembled, the front compression plate 92F and the rear compression plate 92R are captured between respective front and rear flanges/lips of the perimeter casing 56.

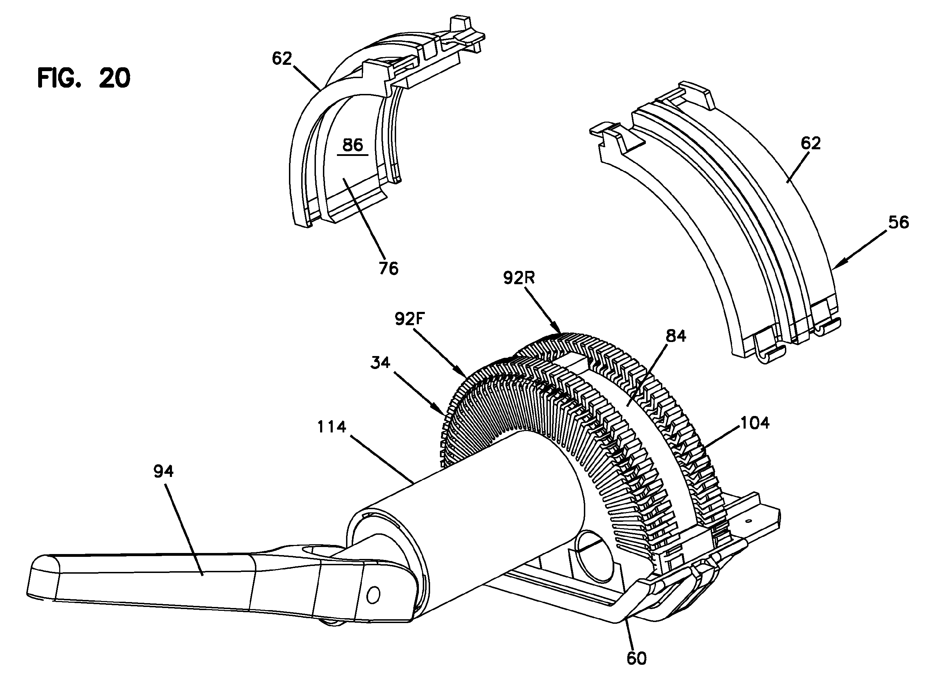

To install peripheral cables 90 at the peripheral cable passage regions 34, the cable sealing block can be disassembled as shown at Figure 20. Peripheral cables 90 can then be inserted laterally between selected ones of the flexible cable pass-through members 104 of the front compression plate 92F and the rear compression plate 92R. During the insertion process, the flexible cable pass-through members 104 can flex apart to accommodate peripheral cables 90 of different sizes. The peripheral cables 90 can be laterally inserted between the flexible cable pass-through members 104 until the cables come into contact with the outwardly facing sealing surfaces 84 of the central sealing member 72. Thereafter, the upper sealing members 76 carried by the bridge pieces 62 can be inserted between the front compression plate 92F and the rear compression plate 92R such that the peripheral cables 90 are captured between the inwardly facing sealing surfaces 86 of the upper sealing members 76 and the outwardly facing sealing surfaces 84 of the central sealing member 72. The bridge pieces 62 are then hooked to the base piece 60 and latched together at the top of the perimeter casing 56 to lock the pieces of the perimeter casing together. As so assembled, the front compression plate 92F and the rear compression plate 92R are captured between respective front and rear flanges/lips of the perimeter casing 56.

Referring back to Figure 12, the rear compression plate 92R includes a front extension 110 that fits inside a central opening 112 of the central sealing member 72. The front extension 110 and the central opening 112 have complementary shapes. In the depicted embodiment, the front extension 110 is integrally formed with the main body of the rear compression plate 92R.

Referring still to Figure 12, the front compression plate 92F includes a front extension in the form of a spring housing 114. The spring housing 114 is depicted as having a tubular shape. The spring housing 114 functions as an enclosure for containing the spring 98. In the depicted embodiment, a rear end of the spring housing 114 is integrally formed with a main body of the front compression plate 92F.

The actuator 36 of the cable sealing device 30 further includes a linkage for forcing the front compression plate 92F and the rear compression plate 92R together so as to compress the cable seal arrangement 38. The linkage includes a central shaft 116 having a rear end coupled (e.g., integrally formed) with the rear compression plate 92R. The central shaft 116 extends through the front compression plate 92F and the spring housing 114. A front end 118 of the central shaft is pivotally connected to the cam lever 94 by a pivot pin 120. The central shaft 116 also extends through the spring 98 and through a slide ring 122 mounted within the spring housing 114. The slide ring is free to move axially within the spring housing 114 along the axis 96. However, a positive stop 124 is provided at a front end of the spring housing 114 stop for stopping forward movement of the slide ring 122 at the front end of the spring housing 114.

In certain embodiments, the spring 98 is housed within the spring housing 114 and is optionally pre-loaded (e.g., pre-compressed) with a substantial preload. The spring 98 is captured between the slide ring 122 and a front side of the front compression plate 92F. The spring housing 114 is not free to move axially relative to the front compression plate 92F. The preload on the spring 98 exists when the slide ring 122 is abutting the positive stop 124 provided at the front end of the spring housing 114.

In the non-actuated orientation, the cam lever 94 does not apply any axially load to the slide ring 122 and the slide ring is biased forwardly by the spring 98 against the positive stop 124 provided at the front of the spring housing 114. In this configuration, the spring is preloaded and held in a pre-loaded state through the cooperation of the slide ring 122 and the front side of the front compression plate 92F. Although the spring is pre-loaded, while the cam lever 94 is in the non-actuated position, no tension is applied to the central shaft 116 and no compressive load is generated for forcing the front compression plate 92F and the rear compression plate 92R together. To actuate the cable sealing device 30, the cam lever 94 is manually pivoted from the non-actuated position of Figure 13 toward the actuated position of Figure 14. As the cam lever 94 pivots toward the actuated position, an end cam surface 126 of the cam lever 94 applies a rearward force to the slide ring 122 in a direction along the axis 96. As the rearward force is applied to the slide ring 122 by the end cam surface 126, tension is applied to the central shaft 116 thereby causing the front compression plate 92F and the rear compression plate 92R to be compressed together. As the cam lever 94 is pivoted further toward the actuated position, the rearward force applied to the slide ring 122 increases thereby further increasing the tension applied to the central shaft 116 and the compressive load generated between the front compression plate 92F and the rear compression plate 92R. When the force generated by the cam lever 94 exceeds the preload on the spring 98, the slide ring 122 begins to slide rearwardly within the spring housing 114 thereby further compressing the spring 98.

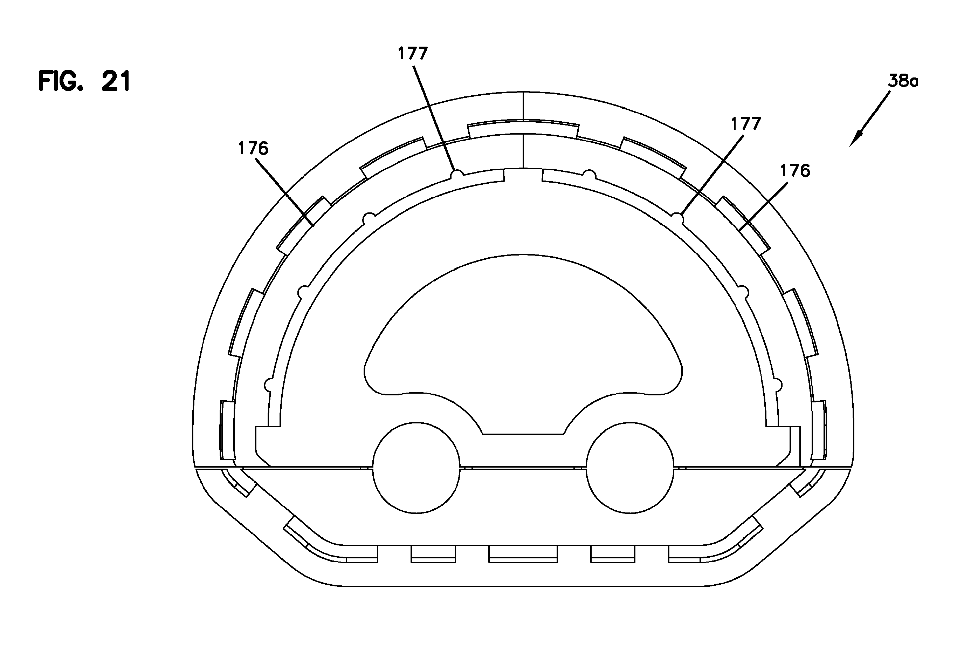

As described above, the configuration of the front compression plate 92F and the rear compression plate 92R allows peripheral cables of various profile sizes to be inserted through the cable sealing device 30. In certain embodiments, custom sealing members/inserts can be used (e.g., substituted, interchanged) with the cable sealing device 30 to effectively seal cables having different profile sizes (e.g., different diameters). For example, Figure 21 shows a modified sealing arrangement 38a having upper sealing members 176 defining cable receiving channels 177 arranged for receiving larger cables routed through the peripheral cable passage region 34. It will be appreciated that sealing member inserts having various sizes and channel configurations can be interchanged for accommodating various different sizes and shapes of cables.

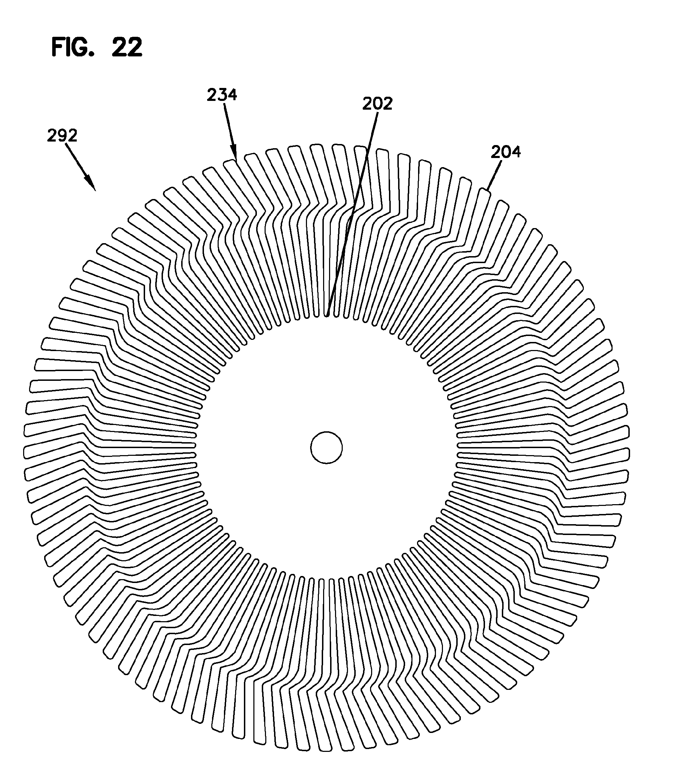

Figure 22 shows an alternative compression plate 292 in accordance with the principles of the present disclosure. The compression plate 292 includes a base region 202 and a plurality of flexible cable pass-through members 204 that project radially outwardly from the base region 202. The compression plate 292 defines a peripheral cable passage region 234 that extends fully around (i.e., 360 degrees around) the base region 202. Unlike the front compression plate 92F and the rear compression plate 92R, the compression plate 292 does not include main central openings for receiving larger cables.

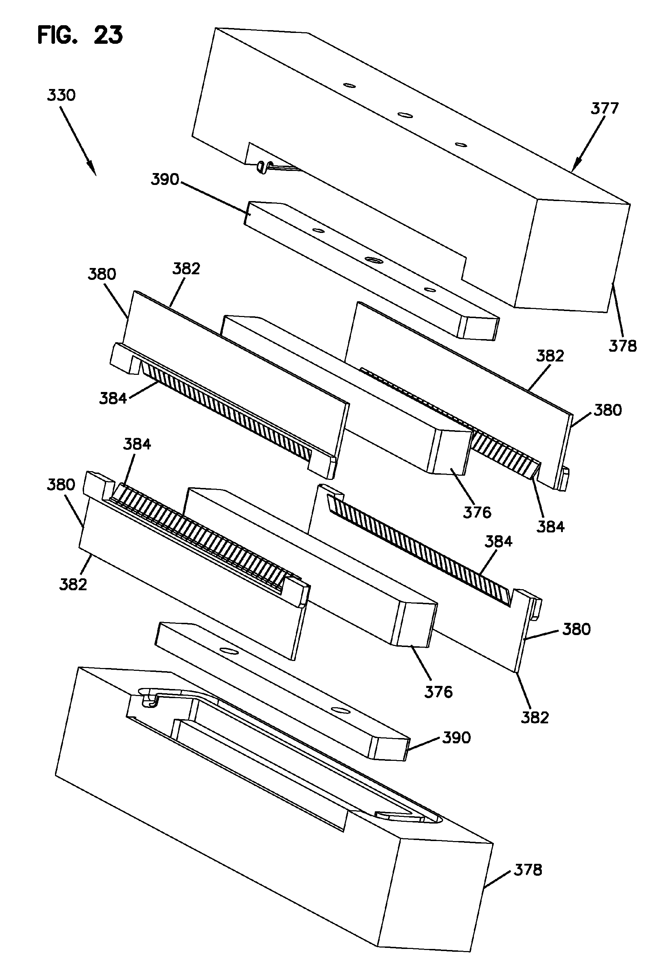

Figure 23 shows another cable sealing device 330 in accordance with the principles of the present disclosure. The cable sealing device includes sealing members 376 that are contained within a cable sealing unit 377. Lateral containment of the sealing members 376 is provided by lateral containment members 378 that are secured together to form a perimeter casing around the sealing members 376. Axial containment of the sealing members 376 is provided by end plates 380 (i.e., containment walls). The end plates 380 include base regions 382 and flexible cable pass-though members 384 that project outwardly from the base regions. The flexible cable pass-through members 384 are arranged in a comb-like configuration. In use of the cable sealing device 330, the cable sealing device 330 is disassembled and cables are routed between the sealing members 376 and through the flexible cable pass-through members 384 of the end plate 380 at opposite ends of the cable sealing device. The lateral containment members 378 are then forced towards one another to compress the sealing members 376 within the cable sealing unit 377. The lateral containment members 378 are secured (e.g., fastened, latched, clamped, etc.) together to maintain the sealing members 376 in a compressed state. Plungers 390 disposed between the lateral containment members 378 and the sealing members 376 assist in compressing the sealing members 376 within the cable sealing unit 377.

It will be appreciated that sealing members of the present disclosure may be formed of any one or more of a variety of sealing materials. Elastomers, including natural or synthetic rubbers (e.g., EPDM rubber or silicone rubber) can be used. In other embodiments, polymeric foam (e.g., open cell or closed cell) such as silicone foam can be used. In still other embodiments, the sealing members may comprise gel and/or gel combined with another material such as an elastomer. The gel may, for example, comprise silicone gel, urea gel, urethane gel, thermoplastic gel, or any suitable gel or geloid sealing material. Gels are normally substantially incompressible; when placed under a compressive force and normally flow and conform to their surroundings thereby forming sealed contact with other surfaces. Example gels include oil-extended polymers. The polymer may, for example, comprise an elastomer, or a block copolymer having relatively hard blocks and relatively elastomeric blocks. Example copolymers include styrene-butadiene or styrene-isoprene di-block or triblock copolymers. In still other embodiments, the polymer of the gel may include one or more styrene-ethylene-propylene-styrene block copolymers. Example extender oils used in example gels may, for example, be hydrocarbon oils (e.g., paraffinic or naphthenic oils or polypropene oils, or mixtures thereof). The sealing members can also include additives such as moisture scavengers, antioxidants, tackifiers, pigments and/or fungicides. In certain embodiments, sealing members in accordance with the principles of the present disclosure have ultimate elongations greater than 100 percent with substantially elastic deformation to an elongation of at least 100 percent. In other embodiments, sealing members in accordance with the principles of the present disclosure have ultimate elongations of at least 200 percent, or at least 500 percent, or at least 1000 percent. Ultimate elongation can be determined by the testing protocol set forth at ASTM D412.

The perimeter casing as well as the compression plates can be formed of one or more of a variety of materials capable of constraining the cable sealing arrangement while the cable sealing arrangement is loaded under pressure. Example materials include one or more plastic materials such as polypropylene, polyamide, polycarbonate, acrylobutadiene-styrene (ABS) or the like. Additionally or alternatively, such members may be formed from one or more metals such as aluminum or steel.

### PARTS LIST

- P2: P1 non-actuated position actuated position
- S 1: first spacings
- S2: second spacings
- SL: stroke length
- 20: telecommunications enclosure
- 22: main housing
- 24: first end
- 26: second end
- 28: opening
- 30: cable sealing device
- 32: central cable port
- 34: peripheral cable passage regions
- 36: actuator
- 38: cable seal arrangement
- 38a: modified sealing arrangement
- 40: interior region
- 42: cover piece
- 44: base piece
- 46: base flange
- 48: groove
- 50: cover flange
- 52: seal compression member
- 54: cable sealing unit
- 56: perimeter casing
- 58: outer sealing element
- 60: base piece
- 61: outer channel
- 62: bridge piece
- 63: outer channel
- 65: lower ends
- 66: lower hook
- 68: catch
- 70: upper latch
- 71: upper ends
- 72: central sealing member
- 74A: inner portion
- 74B: outer portion
- 74C: radial leg
- 74: lower sealing member
- 76A: inner portion
- 76B: outer portion
- 76C: radial leg portion
- 76: upper sealing member
- 80: half-opening
- 82: half-opening
- 84: outwardly facing sealing surface
- 86: inwardly facing sealing surface
- 88: main cable
- 90: peripheral cable
- 92F: front compression plate
- 92L: lower plate portion
- 92R: rear compression plate
- 92U: upper plate portion
- 92: upper plate portion
- 94: cam lever
- 96: axis
- 98: spring
- 100L: lower half-opening
- 100U: upper half-opening
- 100: opening
- 102: base region
- 104: flexible cable pass-through member
- 106: base end
- 108: free end
- 110: front extension
- 112: central opening
- 114: spring housing
- 116: central shaft
- 118: front end
- 120: pivot pin
- 122: slide ring
- 124: positive stop
- 126: end cam surface
- 176: upper sealing member
- 177: cable receiving channel
- 202: base region
- 204: flexible cable pass-through member
- 234: peripheral cable passage region
- 292: compression plate
- 330: cable sealing device
- 376: sealing member
- 377: cable sealing unit
- 378: lateral containment member
- 380: end plate
- 382: base region
- 384: flexible cable pass-though member
- 390: plunger

## Claims

1. A cable sealing device (30) for providing a seal about a cable (90), the cable sealing device comprising a cable seal arrangement (38) that is pressurized to provide sealing about the cable (90), the cable seal arrangement (38) being contained when pressurized at least in part by a containment wall (92F, 92R), **characterized in that** the containment wall (92F, 92R) includes moveable portions (104) configured to move to accommodate cables (90) of different sizes routed through the containment wall (92F, 92R) while maintaining containment of the cable seal arrangement (38).

2. The cable sealing device (30) of claim 1, wherein the moveable portions (104) are movable so as to define first spacings (S1) and second spacings (S2), the second spacings (S2) being at least 10 percent larger than the first spacings (S1).

3. The cable sealing device (30) of claim 1, wherein the moveable portions (104) are movable so as to define first spacings (S1) and second spacings (S2), the second spacings (S2) being at least 100 percent larger than the first spacings (S1).

4. The cable sealing device (30) of any of claims 1-3, wherein the containment wall (92F, 92R) includes a base region (102) and the moveable portions (104) of the containment wall (92F, 92R) include a plurality of flexible cable pass-through members (104) connected to the base region (102), the flexible cable pass-through members (104) being configured to flex apart from one another to accommodate cables of different sizes.

5. The cable sealing device (30) of claim 4, wherein the flexible cable pass-through members (104) have a cantilevered configuration with base ends (106) connected to the base region (102).

6. The cable sealing device (30) of claim 5, wherein the flexible cable pass-through members (104) have lengths that extend radially outwardly from the base region (102).

7. The cable sealing device (330) of claim 5, wherein the flexible cable pass-through members (384) are arranged in a comb-like configuration.

8. The cable sealing device (30) of any of claims 4-7, wherein the flexible cable pass-through members (104) can be flexed between a non-flexed position in which the flexible cable pass-through members (104) define a first cable receiving spacing (S1) and a flexed position in which the flexible cable pass-through members (104) define a second cable receiving spacing (S2), and wherein the second cable receiving spacing (S2) is at least 10 percent larger than the first cable receiving spacing (S1).

9. The cable sealing device (30) of any of claims 4-7, wherein the flexible cable pass-through members (104) can be flexed between a non-flexed position in which the flexible cable pass-through members (104) define a first cable receiving spacing (S1) and a flexed position in which the flexible cable pass-through members (104) define a second cable receiving spacing (S2), and wherein the second cable receiving spacing (S2) is at least 100 percent larger than the first cable receiving spacing (S1).

10. The cable sealing device (30) of any of claims 1-6, 8 and 9, wherein the containment wall (92F, 92R) comprises a compression plate (92F, 92R) formed by a first and second portions (92U, 92L), wherein the first portion (92U) includes the base region (102) and the plurality of flexible cable pass-through members (104), and wherein the first and second portions (92U, 92L) cooperate to define a main cable opening (32) that extends through the containment wall (92F, 92R), and wherein the first and second portions (92U, 92L) can be separated from one another to allow a cable (88) to be laterally inserted into the main cable opening (32).

11. The cable sealing device (30) of any of claims 1-10, wherein the cable sealing device (30) includes two of the containment walls (92F, 92R) that are separated from one another, wherein the cable seal arrangement (38) is positioned between the containment walls (92F, 92R), and wherein the cable sealing device (30) includes an actuator (36) for forcing the containment walls (92F, 92R) together to compress the cable seal arrangement (38).

12. The cable sealing device (330) of claim 11, further comprising a lateral containment structure (378) that laterally contains the cable seal arrangements (376), wherein the lateral containment structure (378) includes separate components that are forced together to compress the cable seal arrangement (376).

13. The cable sealing device (30) of claim 11, wherein the cable sealing arrangement (38) includes sealing inserts (76, 176) having different configurations, wherein different sealing inserts (76, 176) can be selected to customize the cable sealing arrangement (38) to accommodate a particular cable size.

14. The cable sealing device (30) of any of claims 1-13, wherein the movable portions (104) are elastic and elastically clamp the cables (90) routed through the containment wall (92F, 92R).

15. A region (34) for clamping a cable (90), **characterized in that** region (34) includes moveable portions (104) configured to elastically move to accommodate cables (90) of different sizes, the movable portions (104) being configured to elastically clamp the cables (90).
